# EUROPEAN PATENT APPLICATION

(11) **EP 1 631 094 A1**
(43) Date of publication of application: **01.03.2006**
(21) Application number: 05107801.2
(22) Date of filing: 25.08.2005
(51) Int. Cl.: H04N 17/04, G09G 3/36

(54) **Method of calibrating a display apparatus**

(30) Priority: 25.08.2004 KR 2004067128
(71) Applicant: Samsung Electronics Co., Ltd., Yeongtong-gu Suwon-si, Gyeonggi-do (KR)
(72) Inventor: Kang, Hee-young, Byeokjeogol Apt., Suwon-si, Gyeonggi-do (KR); Lee, Sang-hak, Seoul (KR)
(74) Representative: Read, Matthew Charles

(57) **Abstract**

A method of adjusting a displaying state of a display apparatus includes determining a reference colour temperature and a reference colour temperature variation Δu'v', determining setting colour temperatures corresponding to gradations of a grey level according to the reference colour temperature to make colour temperature differences between adjacent gradations of the grey level be within a predetermined colour temperature range, measuring coordinates according to the gradations within a grey area formed by the grey level and displayable in the display apparatus on a predetermined colour coordinates system corresponding to the reference Δu'v' and the setting colour temperatures corresponding to the gradations, and setting the coordinates corresponding to the gradations measured about each gradation of the grey level of the display apparatus. Thus the method of adjusting a displaying state of a display apparatus varies a colour sensation to have directionality and linearity between gradations of a grey level, thereby improving colour representation.

## Description

The present invention relates to a method of adjusting a displaying state of a display apparatus.

Recently, there has been a demand for display apparatus, such as computer monitors and televisions, to be lightweight and thin. Consequently, liquid crystal display (LCD) modules have been widely used as the display apparatus instead of conventional cathode ray tube (CRT) units.

In a LCD module, a liquid crystal having anisotropic permittivity is filled between two substrates. The liquid crystal becomes opaque or transparent according to the intensity of an electric field applied across it, thereby displaying a picture.

The LCD module has difficulty displaying real colour because of displaying characteristics of the LCD module. For example, white displayed on the LCD module inclines toward red even though a video signal of a white level is processed. Further, the more a signal approaches a black level, the more colour inclines toward blue.

There are various standards for colour representation for display apparatus. For example, The Swedish Confederation of Professional Employees (TCO) 03 standard requires that a colour temperature variation (Δu'v') at a gradation of a grey level of 105 or more be smaller than 0.02 to make the display apparatus have a high colour maintenance regardless of a variation of brightness.

With respect to the TCO 03 standard, a conventional display apparatus has the following problems.

The conventional display apparatus has a colour temperature distribution ranging from 7,200K to 11,500K with regard to all gradations, so that the colour temperature varies widely according to the gradation. The more the colour deviates from a white level and approaches a black level, the more the colour inclines toward blue or a dark colour sensation. Thus, even though a picture contains a real colour, the colour is distorted, thereby deteriorating the colour representation.

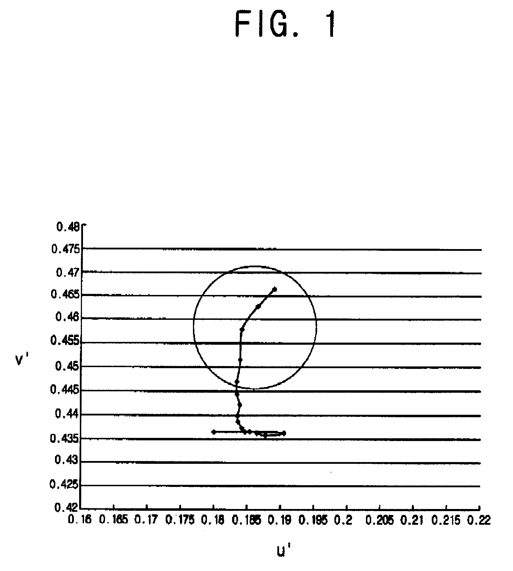

Furthermore, in the conventional display apparatus comprising the LCD module, the Δu'v' is not smaller than 0.02 at a gradation of 105 or more, and is insufficient to satisfy the TCO 03 standard. Figure 1 is a graph illustrating data measured with respect to a picture of a grey level in the LCD module of the conventional display apparatus. Figure 1 shows Δu'v' measured with respect to a grey level of 16 gradations. As shown in Figure 1, Δu'v' is not smaller than 0.02 at a gradation of 105 or more.

To satisfy the TCO 03 standard, the conventional display apparatus divides the grey level into a high and a low, thereby adjusting a red, green, blue (RGB) gain value and an offset value. Alternatively, a predetermined colour value is subtracted from or added to an RGB gamma value, so that Δu'v' is adjusted so as to be smaller than 0.02.

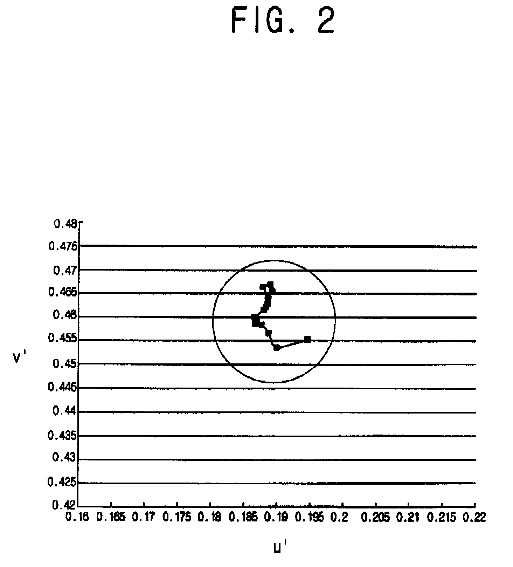

Figure 2 is a graph illustrating the data measured after adjusting the RGB gamma value. Referring to Figure 2, the RGB gamma value of the conventional display apparatus is adjusted so that Δu'v' is smaller than 0.02 at all of the gradations. However, according to displaying characteristics of Figure 2, coordinate values of each gradation are dispersively distributed without directionality, so that colour sensation is distorted and variegated when a picture is displayed on the LCD module.

Furthermore, in the conventional display apparatus, Δu'v' is made smaller than 0.02 at all of the gradations by adjusting the RGB gamma value, but Δu'v' is different according to the gradations. Δu'v' affects the colour sensation at each gradation, so that a linearity of all of the gradations is deteriorated when Δu'v' is different between the gradations.

The present invention seeks to provide a method of adjusting a displaying state of a display apparatus.

According to the present invention there is provided a method of adjusting a displaying state of a display apparatus, the method comprising determining a reference colour temperature and a reference colour temperature variation (reference Δu'v'), determining setting colour temperatures corresponding to gradations of a grey level according to the reference colour temperature to make colour temperature differences between adjacent gradations of the grey level be within a predetermined colour temperature range, measuring coordinates according to the gradations within a grey area formed by the grey level displayable in the display apparatus on a predetermined colour coordinate system corresponding to the reference Δu'v' and the setting colour temperatures corresponding to the gradations, and setting the coordinates corresponding to the gradations measured about each gradation of the grey level of the display apparatus.

The colour coordinate system may include one of a CbCr coordinate system and an XY coordinate system.

The determining of the reference colour temperature and the reference Δu'v' may comprise inputting a reference video signal of a white level into the display apparatus, measuring a colour temperature and a colour temperature variation (Δu'v') of a reference picture displayed on the display apparatus corresponding to the reference video signal, and determining the reference colour temperature and the reference Δu'v' according to the measured colour temperature and the measured Δu'v' of the reference picture.

The determining of the setting colour temperatures corresponding to the gradations of the grey level according to the reference colour temperature to make the colour temperature differences between the adjacent gradations of the grey level be within the predetermined colour temperature range may comprise determining the setting colour temperature according to each gradation to linearly increase with respect to the respective gradations of the grey level from the measured colour temperature of the reference picture.

The reference Δu'v' may be smaller than 0.02.

According to the present invention there is also provided a method of adjusting a state of a display apparatus, the method comprising providing a reference colour temperature and a reference colour temperature variation, determining setting colour temperatures corresponding to gradations of a grey level according to the reference colour temperature, measuring coordinates according to the gradations within a grey area formed by the grey level displayable in the display apparatus on a predetermined colour coordinate system corresponding to the reference colour temperature variation and the setting colour temperatures corresponding to the gradations and setting the coordinates corresponding to the gradations measured about each gradation of the grey level of the display apparatus.

According to the present invention still further provided apparatus for performing the method, such as a processor.

Embodiments of the present invention will now be described, by way of example, with reference to Figures 3 to 5 of the accompanying drawings in which:
Figure 1 is a graph illustrating data measured with respect to a picture of a grey level in a conventional display apparatus;
Figure 2 is a graph illustrating data measured after adjusting an RGB gamma value in the conventional display apparatus of Figure 1;
Figure 3 is a control flowchart illustrating a method of adjusting a displaying state of a display apparatus according to an embodiment of the present invention;
Figure 4 is a graph illustrating a CbCr coordinates system of the display apparatus according to an embodiment of the presentinvention; and
Figure 5 is a graph illustrating data measured with respect to a picture of which the displaying state is adjusted in the display apparatus of Figure 3.

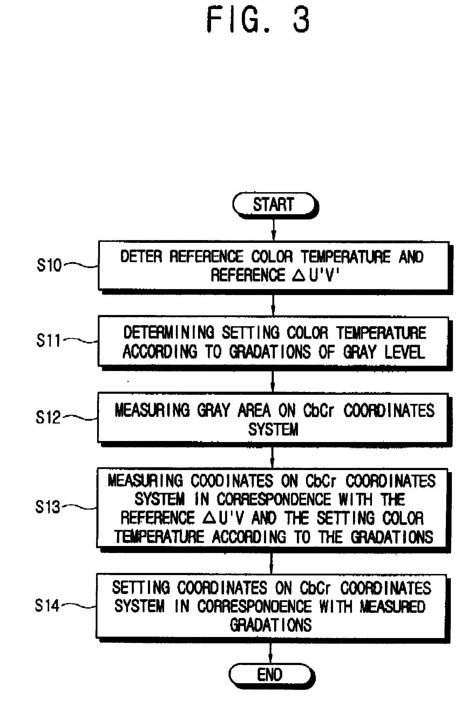

Figure 3 is a control flowchart illustrating a method of adjusting a displaying state of a display apparatus according to an embodiment of the present general inventive concept. Referring to Figure 3, to adjust the displaying state of the display apparatus, first, a reference colour temperature and a reference colour temperature variation (reference Δu'v') are determined at operation S10.

For example, the reference colour temperature and the reference Δu'v' can be determined as follows.

A reference video signal of a white level is input to the display apparatus.

A colour temperature and a colour temperature variation (Δu'v') are measured with respect to a reference picture based on the reference video signal of the white level displayed on the display apparatus.

The reference colour temperature and the reference Δu'v' are determined according to the colour temperature and the Δu'v' measured with respect to the reference picture. For example, when the reference picture has the colour temperature of 9,000K and the Δu'v' of 0.007, these values can be considered inherent displaying characteristics of the display apparatus and accepted as the reference colour temperature and the reference Δu'v'. Thus, at operation S10, the reference colour temperature and the reference Δu'v' are determined according to the measured colour temperature and the measured Δu'v' of the reference picture.

The reference colour temperature and the reference Δu'v' can be determined to be 7,500K and 0.01, respectively. The reference Δu'v' can be smaller than 0.02 to satisfy the TCO 03 standard.

The reference colour temperature and the reference Δu'v' determined by the foregoing method are used as the colour temperature and the Δu'v' at the white level, i.e., at a 255 gradation, respectively.

After determining the reference colour temperature and the reference Δu'v', at operation S11, a setting colour temperature corresponding to each gradation of a grey level is determined according to the reference colour temperature. Here, the setting colour temperature corresponding to each gradation is determined when a colour temperature difference between the setting colour temperatures corresponding to adjacent gradations of the grey level is within a predetermined colour temperature range. That is, the setting colour temperature corresponding to each gradation is determined so as to make the colour temperature differences between the adjacent gradations be within the predetermined colour temperature range.

Here, the setting colour temperature corresponding to each gradation of the grey level can be determined to linearly increase with respect to the respective gradations as the gradations are deviated from the white level toward a black level. For example, as described above, in the case where the reference colour temperature corresponding to 255 gradation is determined to be 7,500K, the setting colour temperature corresponding to 240 gradation is determined to be 7,600K, the setting colour temperature corresponding to 224 gradation is determined to be 7,700K, the setting colour temperature corresponding to 208 gradation is determined as 7,800K, and so on. Thus, the setting colour temperature is linearly increased with respect to the respective gradations of the grey level, so that a colour sensation of the grey level has directionality.

After determining the setting colour temperatures according to the respective gradations of the grey level, at operationS12, a grey area (GA) formed by the grey level and displayable in the display apparatus is measured on a predetermined colour coordinate system.

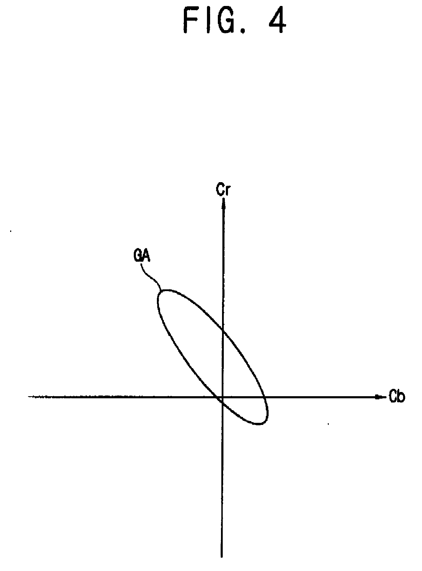

A CbCr coordinate system can be used as the colour coordinate system. Alternatively, an XY coordinate system may be used. That is, at operation S12, the grey area (GA) formed by the grey level and displayable in the display apparatus can be, as shown in Figure 4, measured on the CbCr coordinate system by measuring data about a picture displayed on the display apparatus.

At operation S13, coordinates corresponding to the reference Δu'v' and the setting temperature corresponding to to each gradation are measured within the grey area (GA) formed by the grey level displayable in the display apparatus on the predetermined colour coordinate system. In the case in which the CbCr coordinate system is used, the coordinates are measured on the CbCr coordinate system corresponding to the reference Δu'v' and the setting colour temperature corresponding to each gradation of the grey level.

As described above, in the case where the reference Δu'v' and the setting colour temperature corresponding to each gradation are determined as shown in Table 1, the coordinates are measured corresponding to the reference Δu'v' and the setting colour temperature a corresponding to each gradation on the CbCr coordinate system.

**Table 1**

| Gradation | Setting colour temperature | Reference Δu'v' |
|---|---|---|
| . | . | . |
| . | . | . |
| 176 | 8,000K | 0.01 |
| 192 | 7,900K | 0.01 |
| 208 | 7,800K | 0.01 |
| 224 | 7,700K | 0.01 |
| 240 | 7,600K | 0.01 |
| 255 | 7,500K | 0.01 |

Table 1 illustrates the setting colour temperature and the Δu'v' corresponding to the gradation of 176 or more. However, the setting colour temperature and the Δu'v' at the gradation of 176 or below can be determined by the same method. Furthermore, the Δu'v' is constantly maintained as the reference Δu'v' with respect to all of the gradations, thereby allowing the colour sensation between the respective gradations of the grey level to have linearity.

At operation S14, coordinates of the display apparatus are set to allow the display apparatus to display a picture based on the coordinates measured according to the respective gradations on the CbCr coordinate system. The coordinates of the display apparatus can be set by directly inputting the CbCr coordinates corresponding to each gradation thereto, or by converting the CbCr coordinates into RGB data to be set as an RGB value of the display apparatus.

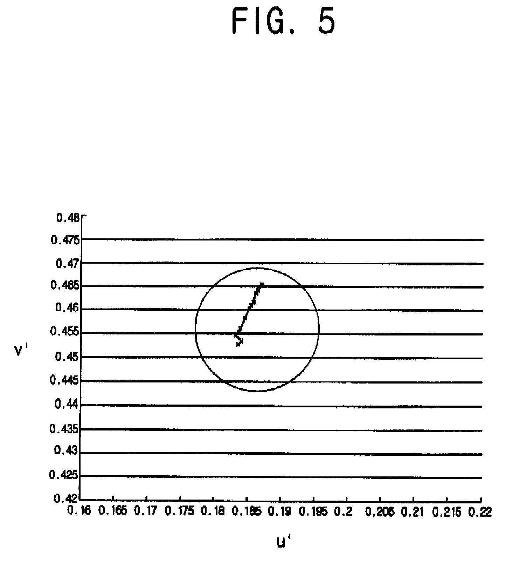

Referring to Figure 5, after setting the coordinates of the display apparatus according to the respective gradations of the grey level, the data measured about each gradation of the grey level can be reflected on a uv coordinate system. As shown therein, the reference Δu'v' is maintained constantly, and measured points are aligned, so that directionality is maintained.

As described above, the reference colour temperature and the reference Δu'v' are determined, the setting colour temperature corresponding to each gradation of the grey level is determined according to the reference colour temperature so as to make the colour temperature differences between the adjacent gradations of the grey level be within the predetermined colour temperature range, the coordinates corresponding to each gradation are measured within the grey area (GA) formed by the grey level and displayable in the display apparatus on a predetermined colour coordinate system corresponding to the reference Δu'v' and the setting colour temperature corresponding to each gradation, and the coordinates of the display apparatus are set based on the coordinates measured according to each gradation of the grey level of the display apparatus, so that the colour sensation between the gradations of the grey level can have the directionality and the linearity, thereby preventing the colour sensation from being distorted, and uniformizing the colour sensation.

As described above, the present general inventive concept provides a method of adjusting a displaying state of a display apparatus, in which colour sensation between gradations of a grey level is varied to have directionality and linearity, thereby enhancing colour representation.

Although a few embodiments of the present invention have been shown and described, it will be appreciated by those skilled in the art that changes may be made to these embodiments without departing from the scope of the invention as defined in the appended claims.

## Claims

1. A method of adjusting a displaying state of a display apparatus, comprising:
determining a reference color temperature and a reference Δu'v';
determining setting color temperatures corresponding to gradations of a gray level according to the reference color temperature to make color temperature differences between adjacent gradations of the gray level be within a predetermined color temperature range;
measuring coordinates according to the gradations within a gray area formed by the gray level displayable in the display apparatus on a predetermined color coordinate system corresponding to the reference Δu'v' and the setting color temperatures corresponding to the gradations; and
setting the coordinates corresponding to the gradations measured about each gradation of the gray level of the display apparatus.

2. The method according to claim 1, wherein the reference Δu'v' is smaller than 0.02.

3. The method according to claim 1, wherein the color coordinate system includes one of a CbCr coordinate system and an XY coordinate system.

4. The method according to claim 3, wherein the reference Δu'v' is smaller than 0.02.

5. The method according to claim 1, wherein the determining of the reference color temperature and the reference Δu'v' comprises:
inputting a reference video signal of a white level into the display apparatus;
measuring a color temperature and a Δu'v' of a reference picture displayed on the display apparatus corresponding to the reference video signal; and
determining the reference color temperature and the reference Δu'v' according to the measured color temperature and the measured Δu'v' of the reference picture.

6. The method according to claim 5, wherein the reference Δu'v' is smaller than 0.02.

7. The method according to claim 5, wherein the determining of the setting color temperatures comprises determining the setting color temperatures corresponding to the respective gradations so that the setting color temperatures are linearly increased with respect to the respective gradations of the gray level from the measured color temperature of the reference picture.

8. The method according to claim 7, wherein the gradations comprise a 255 gradation and a 240 gradation and the setting color temperature of the 240 gradation is 7600K when the setting color temperature of the 255 gradation is 7500K.

9. The method according to claim 1, wherein the measuring of the coordinates comprises:
measuring the gray area by measuring data of a picture displayed on the display apparatus; and
measuring the coordinates so that the coordinates are within the gray area.

10. The method according to claim 1, wherein the setting of the coordinates comprises:
converting the measured coordinates to RGB data; and
setting the coordinates according to the RGB data.

11. A method of improving color representation of a display apparatus, the method comprising:
determining a reference color temperature and a reference color temperature variation corresponding to a reference color;
calculating a plurality of adjustment color temperatures corresponding to a plurality of colors according to the reference color temperature; and
adjusting color temperatures corresponding to colors of a display apparatus according to the plurality of adjustment color temperatures and the reference color temperature variation.

12. The method according to claim 11, further comprising:
maintaining the reference color temperature variation at each of the plurality of colors.

13. The method according to claim 11, wherein the reference color temperature variation is less than 0.02.

14. The method according to claim 11, wherein the reference color is white.

15. The method according to claim 11, wherein the calculating of the plurality of adjustment color temperatures corresponding to the plurality of colors comprises:
calculating the plurality of adjustment color temperatures to be linearly related to the plurality of colors.

16. The method according to claim 15, wherein the calculating of the plurality of adjustment temperatures to be linearly related to the plurality of colors comprises:
increasing the plurality of color temperatures linearly from the reference color temperature as the plurality of colors become darker with respect to the reference color.

17. A method of adjusting a state of a display apparatus, the method comprising:
providing a reference colour temperature and a reference colour temperature variation;
determining setting colour temperatures corresponding to gradations of a grey level according to the reference colour temperature;
measuring coordinates according to the gradations within a grey area formed by the grey level displayable in the display apparatus on a predetermined colour coordinate system corresponding to the reference colour temperature variation and the setting colour temperatures corresponding to the gradations; and
setting the coordinates corresponding to the gradations measured about each gradation of the grey level of the display apparatus.

18. Apparatus configured to perform the method according to claim 17.
